# EUROPEAN PATENT APPLICATION

(11) **EP 4 782 334 A1**
(43) Date of publication of application: **29.07.2026**
(21) Application number: 25214210.4
(22) Date of filing: 07.11.2025
(51) Int. Cl.: B64C 13/50

(54) **FLIGHT CONTROL SYSTEM ACTUATOR PRESSURE OFFSET MONITORING**

(30) Priority: 27.01.2025 US 202519038003
(71) Applicant: Textron Innovations Inc., Providence, Rhode Island 02903 (US)
(72) Inventor: HARRELL, Clifton Lee, Arlington, TX 76001 (US)
(74) Representative: Barker Brettell LLP

(57) **Abstract**

A method (500) for testing actuator pressures, including setting (502) a test actuator and one or more restraining actuators to a quiescent state, where the test actuator and one or more restraining actuators are connected to a same movable element, determining (504) a quiescent pressure delta that is associated with a sum of a first pressure for the test actuator and one or more second pressures for the one or more restraining actuators, disengaging (506) the test actuator from the movable element, where the disengaging includes setting the test actuator to avoid applying pressure to the movable element, determining (510) a test pressure delta that is associated with a sum of third pressures for the one or more restraining actuators after the disengaging of the test actuator, and providing (516) a notification regarding failure of the test actuator according to a relationship between the test pressure delta and a threshold.

## Description

### TECHNICAL FIELD

The present invention relates generally to a system and method for testing redundant actuators, and, in particular embodiments, to a system and method for testing aircraft actuators by releasing pressure in an actuator of an actuator set, and monitoring pressure on the remaining actuators.

### BACKGROUND

Generally, aircraft are required to have redundant systems throughout. The critical nature of many failures dictates that the redundant systems provide high reliability, and testing of the redundant systems can be used verify system reliability. As aircraft, and rotorcraft in particular, have moved from mechanically linked control arrangements to fly-by-wire (FBW) systems aircraft to electrically controlled systems for moving critical movable flight elements such as a rotorcraft swashplate, fixed wing aircraft ailerons, rudder or elevator, tilt-wing aircraft nacelle angle, or the like.

Control arrangements frequently use actuators, or servoloops with actuators, to control movement of the movable flight elements, with redundant actuators controlled by separate flight control computers (FCCs) to provide the greatest level of redundancy. While testing of the individual actuators can provide information regarding the proper operation, using force-based testing when using a force equalization (FE) process may result in inaccurate results.

### SUMMARY

An embodiment method includes setting a test actuator and one or more restraining actuators to a quiescent state, where the test actuator and one or more restraining actuators are connected to a same movable element of a vehicle, determining a quiescent pressure delta that is associated with a sum of a first pressure for the test actuator and one or more second pressures for the one or more restraining actuators, disengaging the test actuator from the movable element, where the disengaging includes setting the test actuator to avoid applying pressure to the movable element, determining a test pressure delta that is associated with a sum of third pressures for the one or more restraining actuators after the disengaging of the test actuator, and providing a notification regarding failure of the test actuator according to a relationship between the test pressure delta and a threshold.

An embodiment method includes performing an actuator disengagement pressure test, including determining a first pressure delta for a set of actuators while each actuator of the set of actuators is substantially nonmoving, where the set of actuators includes a first actuator and one or more second actuators, where the first actuator and one or more second actuators are each mechanically connected to a movable element of a vehicle, and where the first pressure delta is associated with a sum of a first pressure for the first actuator and one or more second pressures for the one or more second actuators, disengaging the first actuator from the movable element, where the disengaging includes removing pressure applied by the first actuator to the movable element, determining a test pressure delta that is associated with a sum of third pressures for the one or more restraining actuators after the disengaging of the first actuator, and determining whether the first actuator fails the actuator disengagement pressure test in response to the test pressure delta falling outside of a range defined by pressure test thresholds, and providing a notification regarding failure of the first actuator in response to the first actuator failing the actuator disengagement pressure test.

An embodiment system includes a test actuator, one or more restraining actuators, where the test actuator and one or more restraining actuators are connected between to a same movable element and a same reference element, one or more processors, and at least one non-transitory computer readable memory connected to the one or more processors and including computer program code. The at least one non-transitory computer readable memory and the computer program code are configured, with the one or more processors, to cause the system to at least set the test actuator and the one or more restraining actuators to a quiescent state, determine a quiescent pressure delta that is associated with a sum of a first pressure for the test actuator and one or more second pressures for the one or more restraining actuators, disengage the test actuator from the movable element, where the disengaging includes setting the test actuator to avoid applying pressure to the movable element, determine a test pressure delta that is associated with a sum of third pressures for the one or more restraining actuators after the disengaging of the test actuator, and provide an notification regarding failure of the test actuator according to a relationship between the test pressure delta and a threshold.

### BRIEF DESCRIPTION OF THE DRAWINGS

For a more complete understanding of the present invention, and the advantages thereof, reference is now made to the following descriptions taken in conjunction with the accompanying drawings, in which:
**Fig. 1** is a diagram illustrating a triple actuator arrangement according to some embodiments;
**Fig. 2** is a logical diagram illustrating a system for testing actuators using actuator disengagement according to some embodiments;
**Figs. 3A-3B** are charts illustrating results of testing a triple actuator arrangement using opposing force measurement according to some embodiments;
**Figs. 4A-4B** are charts illustrating results of testing a triple actuator arrangement using actuator disengagement according to some embodiments; and
**Fig. 5** is a flow diagram illustrating a method for performing testing of a triple actuator arrangement using actuator disengagement according to some embodiments.

### DETAILED DESCRIPTION OF ILLUSTRATIVE EMBODIMENTS

Illustrative embodiments of the system and method of the present disclosure are described below. In the interest of clarity, all features of an actual implementation may not be described in this specification. It will of course be appreciated that in the development of any such actual embodiment, numerous implementation-specific decisions may be made to achieve the developer's specific goals, such as compliance with system-related and business-related constraints, which will vary from one implementation to another. Moreover, it should be appreciated that such a development effort might be complex and time-consuming but would nevertheless be a routine undertaking for those of ordinary skill in the art having the benefit of this disclosure.

Reference may be made herein to the spatial relationships between various components and to the spatial orientation of various aspects of components as the devices are depicted in the attached drawings. However, as will be recognized by those skilled in the art after a complete reading of the present disclosure, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

The increasing use of rotorcraft, in particular, for commercial and industrial applications, has led to the development of larger, more complex rotorcraft. The incasing size and complexity of the aircraft has resulted in a need for larger and increasingly precise control system, while also increasing the need for safety and verifiability of control systems. In many modern aircraft, hydraulic actuators are used to control flight surfaces. For example, in a rotorcraft, hydraulic actuators may be used to control or move the swashplate, with multiple actuator groups disposed around the swashplate to control the tilt of the swashplate for cyclic control, and to raise or lower the entire swashplate for collective control. In another example, for a tilt-wing aircraft, actuator groups may be used for control surfaces such as ailerons, rudders or elevators, or other control surfaces.

FBW systems may be implemented in one or more flight control computers (FCCs) disposed between the pilot controls and flight control systems, providing corrections to flight controls that assist in operating the rotorcraft more efficiently or that put the rotorcraft into a stable flight mode while still allowing the pilot to override the FBW control inputs. The FCCs may translate pilot controls into signals that control the actuators, with modifications, assistance, or other changes made to the pilot commanded control positions to assist in flying the aircraft. Embodiments of the system presented herein are directed to taking advantage of feedback from actuators received by FCCs, and to provide accurate testing of individual actuators.

When multiple actuators drive the same component, a force fight can result. Force fights can introduce high loads into the actuated components, impacting flight performance and component fatigue life. Actuator forces are determined from pressure sensors and algorithms exist to equalize these pressures. However, these force equalization algorithms can cause force fights if the sensed force feedback is inaccurate.

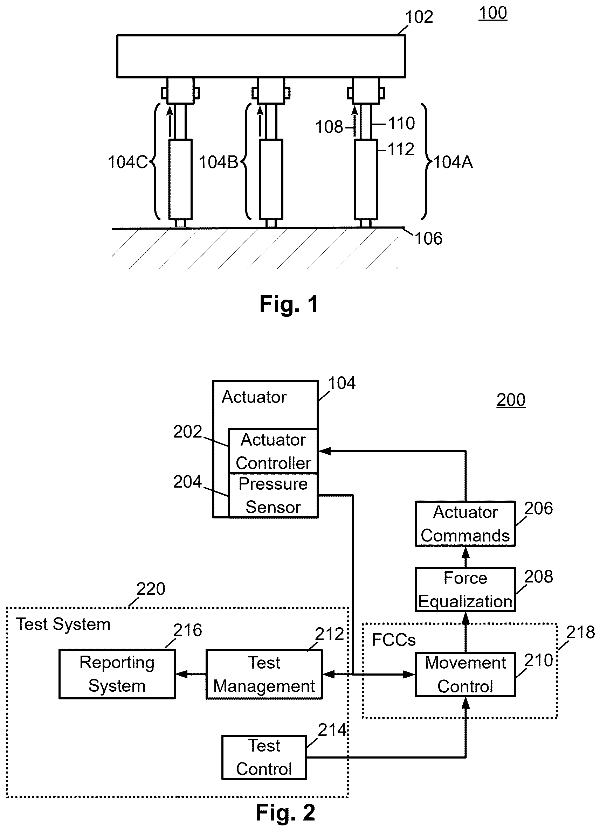

Fig. 1 is a diagram illustrating a triple actuator arrangement 100 according to some embodiments. The triple actuator arrangement 100 may have 3 actuators 104A...104C that provide redundancy. The use of 3 actuators 104A...104C permits the system to override a faulty actuator with the remaining two actuators. Thus, if a first actuator 104A malfunctions by, for example, pushing the wrong direction, the remining actuators 104B, 104C have enough power to override the faulty first actuator 104A, and drive a movable element 102 to the desired position. Testing the actuators permits detection of faults in individual actuators, and isolation of faulty actuators. Thus, the testing permits detection and removal of components affecting performance and flight safety.

In some embodiments, the actuators 104A...104C may be hydraulic, but in other embodiments, may be pneumatic or electrically driven. The actuators 104A...14C are configured to apply a force 108 in both an outward and inward direction so positively move the movable element inward or outward, or toward and away from, a reference element 106.

The actuators 104A...104C are each connected to a same movable element 102 and to a reference element 106. The reference element 106 may be a fixed or reference element from which the movable element 102 is driven. The actuator 104A...104C may redundantly drive the same movable element and a same movement direction of the movable element. In some embodiments where the aircraft is a rotorcraft, the movable element 102 may be a swashplate, with each of the three actuators 104A...104C driving a same portion of the swashplate. The actuators 104A...104C may be individual actuators, or may be actuators of a triple barrel actuator. In some embodiments, the actuators 104A...104C are attached to the movable element 102 by one or more mechanical linkages, and while the actuators 104A...104C are shown as being attached at separate points to the movable element 102, the actuators 104A...104C may be attached to a same mechanical linkage. Additionally, while the actuators 104A...104C are shown as separate elements, the actuators may be part of a triple-barrel device where the actuators are embodied in a single device, but are able to independently apply a force 108 in both an inward and outward direction.

In some embodiments, hydraulic actuators 104A...104C each comprise a cylinder housing 112 containing hydraulic fluid and a piston 110 that extends and retracts based on fluid pressure. Teach hydraulic actuator may have a servo valve or other control element that controls fluid flow to either side of the piston 110 within cylinder housing 112. In various embodiments, the servo valve receives electrical control signals from an FCC to modulate the hydraulic fluid flow and precisely position the piston 110. In other embodiments, the hydraulic valving is remote from the actuators 104A...104C, and is connected to the actuators 104A...104C by hydraulic lines and routes hydraulic fluid under pressure to individual actuators in response to electrical control signals from the FCC.

In some embodiments, the actuators 104A...104C have position sensors that provide feedback on actual actuator positions to enable closed-loop control by the FCCs or by a dedicated actuator control device. Additionally, the actuators 104A...104C have associated pressure sensors that measure the pressure of the hydraulic fluid driving the piston. The pressure sensors are configured to provide a pressure within each actuator 104A...104C so that the load on each actuator, or the force being applied by each actuator 104A...104C can be determined.

Fig. 2 is a logical diagram illustrating a system 200 for testing actuators using actuator disengagement according to some embodiments. The system may be configured to test multiple actuators, with each actuator having an associated pressure sensor 204 and actuator controller 202. The actuator controller 202 may be a circuit, system, mechanism, or the like for causing the actuator to apply pressure for extension or reaction of the actuator 104. For example, the actuator controller 202 for a hydraulic actuator 104 may an electric circuit that receives actuator commands 206 from a movement control element 210 of an FCC 218. The actuator controller 202 may also have hydraulic valves that are actuated by the electric circuit of the actuator controller, that sends or routes pressurized hydraulic fluid to the actuator 104 to move the actuator 104 piston and drive a movable element.

The pressure sensor 204 may, in a hydraulic actuator, be a hydraulic pressure sensor that measures pressure within the cylinder housing, or another part of the hydraulic system. In an embodiment where the actuator 104 is electric, the pressure sensor may measure drive current, power usage or anther actuator characteristic, such as electrical resistance, or the like. In other embodiments, the pressure sensor may be a piezoelectric sensor that measures strain, compression or stress in the system.

The movement control element 210 may be a software process run by the FCC 218 or a standalone device, or may be a hardware system, such a circuit, a mechanical or hydraulic control system, or the like, and may receive pressure feedback data from the pressure sensor 204 to permit the movement control element 210 to accurately position the actuator 104. The movement control element 210 may generate commands for positioning the actuator 104 based on data, such as the pressure or positioning feedback from the pressure sensor 204, or from other sensors. In some embodiments, the movement control element 210 closes the loop on position by setting the actuator 104 to a desired position, and a force equalization process uses the sensed pressure to share a load across actuators.

In some embodiments, the commands from the movement control element 210 may be adjusted by a force equalization routine 208 to generate the actuator commands 206 to even the stress, wear and fatigue on individual actuators 104. During normal operation, three actuators 104, or a triple barrel actuator, are used to drive a movable element, and all actuators 104 should work in tandem to share the load. During normal operation, actuators 104 move around to move surfaces or movable elements, and the force equalization loop or active loop causes the actuators 104 or actuator barrels share a load fairly equally. Under the force equalization routine 208, when one barrel at higher pressure might push less, and actuators at lower pressure would push more.

Assuming all pressure sensors 204 correctly report back pressures, and actuators are working correctly, force equalization effectively does nothing, since everything is correct. Typically, force equalization is present to adjust the commands to equalize or share the load between actuators, so that, even if the actuators are working correctly or within specification, force equalization accommodates or corrects for variations in tolerances in the actuators. If a sensor of one actuator is bad and providing incorrect readings, by, for example, reading low, the associated actuator would also push, and cause a force fight. In a position loop closed actuator, a low pressure reading would cause a servoloop or actuator to push harder to share the load due to force equalization generating a push command based on the faulty sensor reading. If the load is reading erroneously low, then, when commands to the actuators are adjusted based on the low reading, a force fight may be started in an effort to drive the actuators so that the load sensors indicate about the same pressure or load. For a pressure loop closure, the actuator would not be pushing hard enough. However, systems frequently close the loop on position and share the load with force equalization pressure or force sensor feedback.

The force fight might result in damage to an actuator, such as a bent rod or piston, as result of the actuator trying equalize the other two. A force fight may also prematurely fatigue an actuator 104, or reduce performance during flight. Additionally, another actuator failure could cause a potential failure of the overall actuator system.

The system may further have a test system 220 that handles testing actuators 104 using actuator disengagement. This is in contrast to force based testing where force equalization may mask malfunctioning or improperly reporting pressure sensors. The test system 220 may include a test management element 212 that receives pressure readings or measurements from the pressure sensor 204 from the actuator disengagement pressure test. Additionally, the test system 220 may have a test control element 214 that initiates a test automatically, in response to a communication or signal from, for example, a fleet management system, in response to aircraft startup , a pilot command, a signal from the cockpit, or the like The test control element 214 may send a signal or data to the FCCs causing the FCCs to engage in the actuator disengagement pressure test, and may, cause the FCCs to run multiple tests to test each actuator in an actuator group, or to test actuators in different actuator groups. In some embodiments, the test system 220 may be a software component or other feature within, residing on, or running on, one or more controlling FCCs. The software test system 220 may perform the force fight testing when activated, through an interface such as a pilot interface, test interface, or the like. In some embodiments, the test system may ensure that the vehicle is in a safe condition, such as being in an non-flight mode, such as an on-ground condition, or is otherwise safe, before performing the force fight testing.

The test management element 212 may compare received pressure measurements and compare the pressure measurements to a threshold to determine whether the pressure readings for the actuator under test indicate that the actuator 104 fails, needs maintenance, needs inspection, or the like. The test management element 212 may send data to a reporting system 216 indicating the results of the testing. The reporting system 216 may determine whether a notification such as an alert to a pilot, a maintenance notification, or another report, or alert or notice is needed. In some embodiments, where a test on an actuator indicates that the actuator 104 has failed, the reporting system may raise an alert, for example, to a pilot in the cockpit of the aircraft with the failed actuator or pressure sensor 204. In another embodiment, the reporting system 216 may post a maintenance notification to a fleet management system, maintenance log, maintenance schedule, or the like, and may generate the maintenance related notification in addition to providing an in-cockpit pilot alert. In yet another embodiment, the reporting system 216 may send data to the FCC 218 causing the FCC 218 to disable the actuator 104 or compensate for the failed actuator 104, for example, where the remaining actuators provide adequate redundancy, or where the flight cannot be cancelled, such as for a return flight from a location without maintenance facilities.

The FCCs 218 and test system 220, or individual elements or subsystems thereof may be implemented on one or more computer systems, for example, using standalone computers, one or more servers, and/or cloud computing resources or systems. Thus, the system 200 or a subsystem may have one or more processors and one or more non-transitory computer readable memory or media, which may store computer program code for implementing functionality of the system.

References to computer-readable storage medium, computer program product, tangibly embodied computer program, or the like, or a controller, display system, computer, processor, or the like should be understood to encompass not only computers having different architectures such as single or multi-processor architectures and sequential (Von Neumann) or parallel architectures but also specialized circuits such as field-programmable gate arrays (FPGAs), application specific circuits (ASICs), signal processing devices and other devices. References to computer program, instructions, code, or the like, should be understood to encompass software for a programmable processor or firmware such as, for example, the programmable content of a hardware device whether instructions for a processor, or configuration settings for a fixed-function device, gate array or programmable logic device, or the like.

The system may have at least one processor and at least one memory, such as a non-transitory computer readable medium, and may include computer program code, that is configured to, with the at least one processor, provide the actuator disengagement pressure testing. The memory may be a single component or, may be implemented as one or more separate components, some or all of which may be integrated or removable and may provide permanent, semi-permanent, dynamic, or cached storage.

The one or more processors are configured to read from and write to the at least one memory. The processor may also comprise an output interface via which data or commands are output by the processor and an input interface via which data or commands are input to the processor. The memory stores a computer program including computer program instructions that control the operation, when loaded into the processor, of the overall system 200, or one or more of FCCs 218 and test system 220. The computer program instructions provide the logic and routines that enable the apparatus to perform the actuator disengagement pressure testing, test management, test reporting and control, and the like. The processor, by reading the memory, is able to load and execute the computer program. The computer program or programs may arrive at the apparatus via any suitable delivery mechanism. The delivery mechanism may be, for example, a computer-readable storage medium, a computer program product, a memory device, a record medium such as a compact disc read only memory (CD-ROM), digital versatile disc (DVD), portable memory such as a memory stick or hard drive, or the like, an article of manufacture that tangibly embodies the computer program. In some embodiments, the delivery mechanism may be a signal configured to reliably transfer the computer program over the air or via an electrical or optical connection.

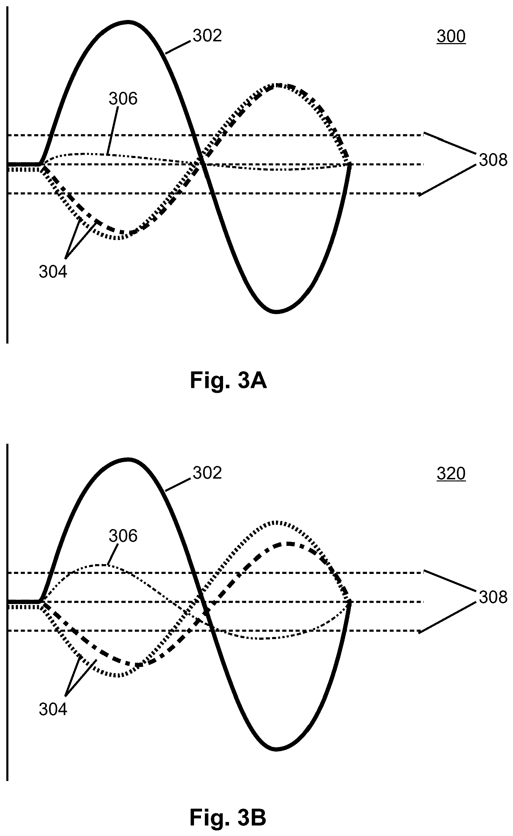

Figs. 3A-3B are charts 300, 320 illustrating results of testing a triple actuator arrangement using opposing force measurement according to some embodiments. Fig. 3A is a chart 300 illustrating measured pressures 302, 304 indicating an actuator passing a force-based pressure test according to some embodiments. The chart 300 illustrates a pressure on the y-axis and time on the x-axis, with the measured pressures 302, 304 illustrating pressures measured at the actuators over time.

A system is checked during a non-flight test, such as a pre-flight built-in test, that assesses the actuator's ability to generate a commanded force and verifies force sensing accuracy. A test may be run to drive one actuator positive, generating a force fight. The pressure 302 of the first actuator, or actuator under test, is measured or otherwise acquired. The testing checks to verify that the other two actuators, or restraining or opposing actuators, restrain against the force fight. During the test, the pressures 304 of the restraining actuators is measured or otherwise acquired. The force based test sequentially commands one channel to a positive and then a negative force level and measures the response of the restraining channels. The first actuator pressure 302 should rise to a selected pressure (for example, to 50% maximum pressure) during the force fight, and the sum of the pressures 304 of the other two restraining actuators should go negative (n the example, about 25% each) and drive the opposite direction. The system test pressure 306 is the sum of the pressures 302, 304. Ideally, the sum of the initiating and restraining forces should be zero. However, systems are not perfect, as stiffness, friction, and the like can affect individual actuators, so the system test pressure 306 may not equal zero at all times. Thus, pressure test thresholds 308 may be used, and the system may pass testing if the system test pressure 306 is within the pressure test thresholds 308. However, while using force equalization, if sensed force errors or offsets are undetected, a false "pass" can result. A force (pressure) sensing error can go undetected because of the implemented algorithm, with force equalization active, or due to undesired system characteristics such as friction, stiction, temperature, initial force equalization offsets, or the like, which can negatively impact the test results. This because, with force equalization, delta pressure readings may drive and look the same, but the force fight will go undetected. Turning off force equalization, results in a test that is less well behaved due to outside factors, as friction may make it hard to detect a force fight or offset.

Fig. 3B is a chart 320 illustrating pressures 302, 304 indicating an actuator failing a force-based pressure test according to some embodiments. The test results indicate an unhealthy system, which may be due to faulty pressure sensors, actuator friction, actuator defect, or other defects or problems. The system test pressure 306 exceeding the pressure test thresholds 308 is due to the sum of the pressures 304 of the resisting actuators not matching the pressure of the test actuator. In some embodiments, the sum of the pressure or forces being applied by the actuators is determined, indicating the load being carried. After turning off the actuator under test, the sum of remaining actuator pressures may be measured, and the two sums may be compared to see if they disagree, indicating that the indicated load being held has changed. The change in the indicated load indicates that the actuator that was turned off has a faulty sensor.

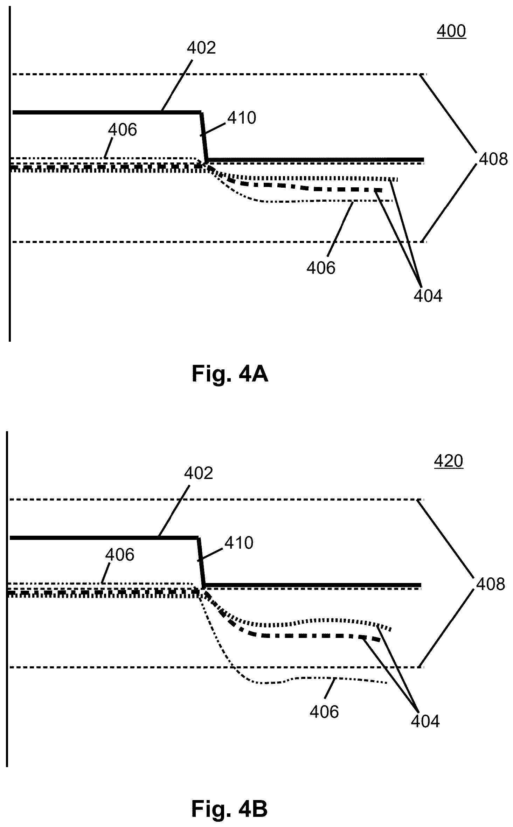

Figs. 4A-4B are charts 400, 420 illustrating results of testing a triple actuator arrangement using actuator disengagement according to some embodiments. Fig. 4A is a chart 400 illustrating pressures 402, 404 indicating an actuator passing an actuator disengagement pressure test according to some embodiments.

In some embodiments, the actuator disengagement pressure test may include applying a pressure to a first actuator that is under test, and releasing the pressure or otherwise disengaging the actuator, and measuring the response of the remaining or restraining actuators. Actuator disengagement pressure testing more accurately detects actuator force sensor errors or offsets that a force-based test and prevents undetected sensor offsets from impacting component life and aircraft performance. Actuator disengagement pressure testing evaluates the change in the applied forces when a single servoloop or actuator is disengaged. On systems that provide additional validation of delta pressure sensed accuracy, such as actuators with Integrated Three Function Valves (ITFVs), the actuator disengagement pressure testing may completely remove the need for initiating verse restraining delta pressure comparisons.

In some embodiments, an actuator disengagement pressure test starts with the system in a force equalized quiescent condition. In quiescent state, all delta Ps are close. Where an offset exists, a bad reading in the test actuator sensor results in the test actuator pushing against the other two restraining actuators. However, when the test actuator has no offset, where the pressure sensor reads the correct pressure, and the test actuator is turned off or disengaged, the pressures of other two restraining actuators will not change significantly. In some embodiments, the test may be performed with the actuators initially holding a load, and the sum of pressures reported by the three actuators should, in a properly functioning system, be about the same as the total pressure reported by the two retraining actuators when the test actuator is deactivated. This is because the two restraining actuators take up the load released by the test actuator when the test actuator is turned off.

If force equalization in an actuator group with a test actuator with a bad sensor causes a force fight, then when the test actuator is turned off, sum of the load changes in other two restraining actuators are due to erroneous load driven by bad test actuator. Turning off the actuator allows location of a bad actuator based on the response of the restraining actuator and allows detection of offset without considering dynamic aspects such as friction and stiction.

In some embodiments, setting the quiescent condition may comprise driving one or more actuators to a particular location or pressure for the test, and then maintain the pressure, location, or state of the actuators in a substantially stable condition as an initial test condition or state. In the quiescent condition, the test actuator and restraining actuators may be in a force equalized condition, with the actuators substantially nonmoving and without the piston moving within the housing, or in a substantially stable or substantially still condition. In some embodiments, setting the actuators to a quiescent condition may include driving actuators to the selected location or pressure to get out of a stiction or friction band before turning off test actuator. In other embodiments, setting the actuators to a quiescent condition, includes moving, before the moving through the test, the actuators to take up weight of a movable element. In the quiescent condition, before actuators have taken up weight, an initiating actuator will start to drive, and other actuators wait to see movement. The difference in movement times may be due to slop in a mechanism, and partly because the system or actuators need to take up the initial weight. Thus, the actuators may apply some pressure or force to, for example, a swashplate, by putting a 200 hundred pound pressure load on a 500 pound swashplate. Thus, a test may take up or apply a load, turn off or disengage the test actuator, and measure any change in pressure or force of the restraining actuators. If the test actuator is bad, the restraining actuators they will have pressure shift response in load pressure or force, but may not experience motion.

The actuator disengagement pressure test further permits detection of pressure offsets caused by faulty pressure sensors or actuators, providing for detection of offsets that may go undetected by conventional dive comparison tests. In some embodiments, force equalization may be left on or applied during testing for some actuators so that the force equalization hides or overcomes offset due to stiction, friction or dynamics.

The quiescent state is illustrated by the steady state conditions of the first actuator pressure and second, restraining actuator pressures 404 while all actuators are activated. The testing includes capturing the sum of sensed forces or pressures, and then evaluates the changes in the sum of the remaining forces when the servoloop under test is disengaged. For example, the system test pressure 406 is the sum of a pressure being reported as applied by a test actuator and pressures 404 being applied by restraint actuators. Before the test actuator is disengaged, the system test pressure may be a quiescent test pressure delta, while after the disengagement, the system test pressure may be a test pressure delta that is the sum of pressures of the restraint actuators.

When a control signal 402 signals actuator disengagement 410, the actuator under test is disengaged from the restraining actuators so that the test actuator is not applying force in opposition to the restraining actuators. When an actuator without undesired sensed pressure offsets is disengaged and force equalization is not actively generating a force fight, the delta change in applied forces are negligible, and the system test pressure 406 is within the allowed threshold, between the pressure test thresholds 408.

Fig. 4B is a chart 420 illustrating pressures 404 indicating an actuator failing an actuator disengagement pressure test according to some embodiments. When an actuator with undesired sensed pressure offsets is disengaged a control signal 402 signaling actuator disengagement 410, the delta change in applied forces is unacceptable, with at least a part of the system test pressure 406 beyond the allowed threshold, falling outside the pressure test thresholds 408.

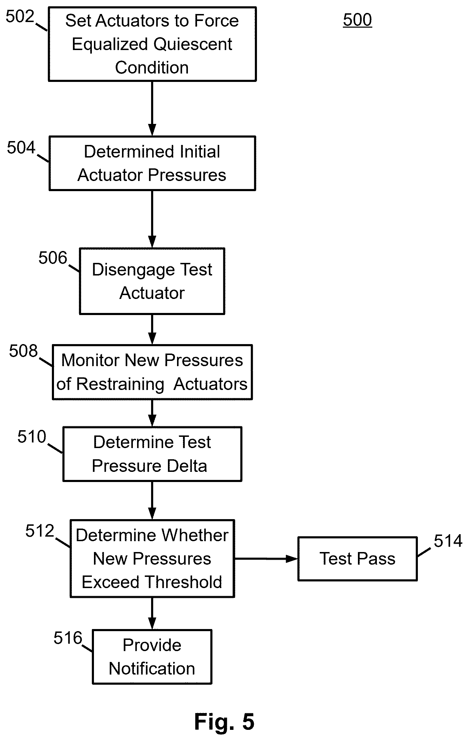

Fig. 5 is a flow diagram illustrating a method 500 for performing testing of a triple actuator arrangement using actuator disengagement according to some embodiments. In block 502, actuators are set to a force equalized quiescent condition. In some embodiments, a test actuator and one or more restraining actuators are set to a quiescent state, with the test actuator and one or more restraining actuators being connected to a same movable element of a vehicle so that. the actuators take up at least portion of a weight of the movable element.

The test actuator and restraining actuators may be part of a group of actuators that are arranged to redundantly control a same movable element. In some embodiments, the movable element is a swashplate of a rotorcraft, and the actuators are disposed between the swashplate and a fixed or reference element on the rotorcraft, such as a frame or support. In block 504, the initial actuator pressures are determined. The initial actuator pressures may be associated with a quiescent pressure delta that is associated with a sum of a pressure for the test actuator and second pressures for the restraining actuators.

In block 506, the test actuator is disengaged. The test actuator may be disengaged from the movable element by, for example, setting the test actuator to avoid applying pressure to the movable element or removing pressure applied by the test actuator to the movable element. In some embodiments, the setting the actuators to the quiescent state or disengaging the test actuator from the movable element are by one or more FCCs, with the FCCs sending commands to the relevant actuators, or to a control or management system for the actuators.

In block 508, the new pressures of the restraining actuators are monitored, acquired or otherwise determined. The new pressures are the pressures of restraining actuators after disengaging of the test actuator. In block 510, the test pressure delta is determined. The test pressure delta that is associated with a sum of pressures for the one or more restraining actuators after disengaging of the test actuator, and may, in some embodiments, be a change in the sum of pressured caused by disengagement of the test actuator.

In block 512, a system determines whether the new pressures or test pressure delta exceeds a threshold. If the new pressures or test pressure delta is below a threshold, or within or between pressure test thresholds, the test is passed in block 514. If the new pressures or test pressure delta is above or exceeds a threshold, or is outside pressure test thresholds or a range deigned by the pressure test thresholds, the test is failed, and a notification is provided in block 516. In some embodiments, the notification regards a failure of the test actuator, and may be determined according to a relationship between the test pressure delta and a threshold. In some embodiments, the notification is an alert is provided to a pilot in a cockpit of the vehicle.

An embodiment method includes setting a test actuator and one or more restraining actuators to a quiescent state, where the test actuator and one or more restraining actuators are connected to a same movable element of a vehicle, determining a quiescent pressure delta that is associated with a sum of a first pressure for the test actuator and one or more second pressures for the one or more restraining actuators, disengaging the test actuator from the movable element, where the disengaging includes setting the test actuator to avoid applying pressure to the movable element, determining a test pressure delta that is associated with a sum of third pressures for the one or more restraining actuators after the disengaging of the test actuator, and providing a notification regarding failure of the test actuator according to a relationship between the test pressure delta and a threshold.

In some embodiments, the movable element is a swashplate of a rotorcraft. In some embodiments, the test actuator and the one or more restraining actuators are part of a group of actuators that are arranged to redundantly control a same movable element. In some embodiments, the setting the test actuator and the one or more restraining actuators to the quiescent state includes causing the test actuator and the one or more restraining actuators to take up at least portion of a weight of the movable element. In some embodiments, disengaging the test actuator is performed while force equalization is applied to at least the test restraining actuator. In some embodiments, the method is performed as part of a non-flight test, and the notification is an alert is provided to a pilot in a cockpit of the vehicle. In some embodiments, setting the test actuator and the one or more restraining actuators to the quiescent state, and the disengaging the test actuator from the movable element is performed in response to one or more commands from a flight control computer (FCC). In some embodiments, the method includes determining whether the test actuator fails an actuator disengagement pressure test in response to the test pressure delta falling outside of a range defined by pressure test thresholds, and where the providing the notification regarding failure of the test actuator includes providing the notification regarding failure of the test actuator in response to the test actuator failing the actuator disengagement pressure test.

An embodiment method includes performing an actuator disengagement pressure test, including determining a first pressure delta for a set of actuators while each actuator of the set of actuators is substantially nonmoving, where the set of actuators includes a first actuator and one or more second actuators, where the first actuator and one or more second actuators are each mechanically connected to a movable element of a vehicle, and where the first pressure delta is associated with a sum of a first pressure for the first actuator and one or more second pressures for the one or more second actuators, disengaging the first actuator from the movable element, where the disengaging includes removing pressure applied by the first actuator to the movable element, determining a test pressure delta that is associated with a sum of third pressures for the one or more restraining actuators after the disengaging of the first actuator, and determining whether the first actuator fails the actuator disengagement pressure test in response to the test pressure delta falling outside of a range defined by pressure test thresholds, and providing a notification regarding failure of the first actuator in response to the first actuator failing the actuator disengagement pressure test.

In some embodiments, each actuator of the set of actuators is connected between the movable element and a reference element, and the actuators of the set of actuators are arranged to redundantly control the movable element. In some embodiments, the method further includes setting each actuator of the set of actuators to be substantially nonmoving. In some embodiments, setting each actuator of the set of actuators to be substantially nonmoving includes causing the set of actuators to take up at least portion of a weight of the movable element. In some embodiments, setting each actuator of the set of actuators to be substantially nonmoving is performed in response to one or more commands from a flight control computer (FCC). In some embodiments, at least the disengaging the first actuator is performed while force equalization is applied to at least the test actuator.

An embodiment system includes a test actuator, one or more restraining actuators, where the test actuator and one or more restraining actuators are connected between to a same movable element and a same reference element, one or more processors, and at least one non-transitory computer readable memory connected to the one or more processors and including computer program code. The at least one non-transitory computer readable memory and the computer program code are configured, with the one or more processors, to cause the system to at least set the test actuator and the one or more restraining actuators to a quiescent state, determine a quiescent pressure delta that is associated with a sum of a first pressure for the test actuator and one or more second pressures for the one or more restraining actuators, disengage the test actuator from the movable element, where the disengaging includes setting the test actuator to avoid applying pressure to the movable element, determine a test pressure delta that is associated with a sum of third pressures for the one or more restraining actuators after the disengaging of the test actuator, and provide an notification regarding failure of the test actuator according to a relationship between the test pressure delta and a threshold.

In some embodiments, the system further includes a swashplate of a rotorcraft as the movable element. In some embodiments, the test actuator and the one or more restraining actuators are part of a group of actuators that are arranged to redundantly control a same movement direction of the swashplate. In some embodiments, setting the test actuator and the one or more restraining actuators to the quiescent state includes causing the test actuator and the one or more restraining actuators to take up at least portion of a weight of the swashplate. In some embodiments, at least the disengaging the test actuator and the determining the test pressure delta are performed while force equalization is applied to the one or more restraining actuators. In some embodiments, the at least one non-transitory computer readable memory and the computer program code are configured, with the one or more processors, to further cause the system to determine whether the test actuator fails an actuator disengagement pressure test in response to the test pressure delta falling outside of a range defined by pressure test thresholds, and where the providing the notification regarding failure of the test actuator includes providing the notification regarding failure of the test actuator in response to the test actuator failing the actuator disengagement pressure test.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. A method, comprising:
setting a test actuator and one or more restraining actuators to a quiescent state, wherein the test actuator and one or more restraining actuators are connected to a same movable element of a vehicle;
determining a quiescent pressure delta that is associated with a sum of a first pressure for the test actuator and one or more second pressures for the one or more restraining actuators;
disengaging the test actuator from the movable element, wherein the disengaging comprises setting the test actuator to avoid applying pressure to the movable element;
determining a test pressure delta that is associated with a sum of third pressures for the one or more restraining actuators after the disengaging of the test actuator; and
providing a notification regarding failure of the test actuator according to a relationship between the test pressure delta and a threshold.

2. A system, comprising:
a test actuator;
one or more restraining actuators, wherein the test actuator and one or more restraining actuators are connected between to a same movable element and a same reference element;
one or more processors; and
at least one non-transitory computer readable memory connected to the one or more processors and including computer program code, wherein the at least one non-transitory computer readable memory and the computer program code are configured, with the one or more processors, to cause the system to at least:
set the test actuator and the one or more restraining actuators to a quiescent state;
determine a quiescent pressure delta that is associated with a sum of a first pressure for the test actuator and one or more second pressures for the one or more restraining actuators;
disengage the test actuator from the movable element, wherein the disengaging comprises setting the test actuator to avoid applying pressure to the movable element;
determine a test pressure delta that is associated with a sum of third pressures for the one or more restraining actuators after the disengaging of the test actuator; and
provide an notification regarding failure of the test actuator according to a relationship between the test pressure delta and a threshold.

3. The method of claim 1, wherein the movable element is a swashplate of a rotorcraft; or the system of claim 2, further comprising a swashplate of a rotorcraft as the movable element.

4. The method of any preceding claim, wherein the test actuator and the one or more restraining actuators are part of a group of actuators that are arranged to redundantly control a same movable element; or
the system of any preceding claim, wherein the test actuator and the one or more restraining actuators are part of a group of actuators that are arranged to redundantly control a same movement directi0n of the swashplate.

5. The method of any preceding claim, wherein the setting the test actuator and the one or more restraining actuators to the quiescent state comprises causing the test actuator and the one or more restraining actuators to take up at least portion of a weight of the movable element; or
the system of any preceding claim, wherein the setting the test actuator and the one or more restraining actuators to the quiescent state comprises causing the test actuator and the one or more restraining actuators to take up at least portion of a weight of the swashplate.

6. The method any preceding claim, wherein the disengaging the test actuator is performed while force equalization is applied to at least the test restraining actuator; or
the system of any preceding claim, wherein at least the disengaging the test actuator and the determining the test pressure delta are performed while force equalization is applied to the one or more restraining actuators.

7. The method of any preceding claim, wherein the method is performed as part of a non-flight test, and wherein the notification is an alert is provided to a pilot in a cockpit of the vehicle.

8. The method of any preceding claim, wherein the setting the test actuator and the one or more restraining actuators to the quiescent state, and the disengaging the test actuator from the movable element is performed in response to one or more commands from a flight control computer (FCC).

9. The method of any preceding claim, further comprising determining whether the test actuator fails an actuator disengagement pressure test in response to the test pressure delta falling outside of a range defined by pressure test thresholds; and
wherein the providing the notification regarding failure of the test actuator comprises providing the notification regarding failure of the test actuator in response to the test actuator failing the actuator disengagement pressure test; or
the system of any preceding claim, wherein the at least one non-transitory computer readable memory and the computer program code are configured, with the one or more processors, to further cause the system to determine whether the test actuator fails an actuator disengagement pressure test in response to the test pressure delta falling outside of a range defined by pressure test thresholds; and
wherein the providing the notification regarding failure of the test actuator comprises providing the notification regarding failure of the test actuator in response to the test actuator failing the actuator disengagement pressure test.

10. A method, comprising:
performing an actuator disengagement pressure test, comprising:
determining a first pressure delta for a set of actuators while each actuator of the set of actuators is substantially nonmoving, wherein the set of actuators comprises a first actuator and one or more second actuators, wherein the first actuator and one or more second actuators are each mechanically connected to a movable element of a vehicle, and wherein the first pressure delta is associated with a sum of a first pressure for the first actuator and one or more second pressures for the one or more second actuators;
disengaging the first actuator from the movable element, wherein the disengaging comprises removing pressure applied by the first actuator to the movable element;
determining a test pressure delta that is associated with a sum of third pressures for the one or more restraining actuators after the disengaging of the first actuator; and
determining whether the first actuator fails the actuator disengagement pressure test in response to the test pressure delta falling outside of a range defined by pressure test thresholds; and
providing a notification regarding failure of the first actuator in response to the first actuator failing the actuator disengagement pressure test.

11. The method of claim 10, wherein each actuator of the set of actuators is connected between the movable element and a reference element, and wherein the actuators of the set of actuators are arranged to redundantly control the movable element.

12. The method of claim 10 or claim 11, further comprising setting each actuator of the set of actuators to be substantially nonmoving.

13. The method of any of claims 10 to 12, wherein the setting each actuator of the set of actuators to be substantially nonmoving comprises causing the set of actuators to take up at least portion of a weight of the movable element.

14. The method of any of claims 10 to 13, wherein the setting each actuator of the set of actuators to be substantially nonmoving is performed in response to one or more commands from a flight control computer (FCC).

15. The method of any of claims 10 to 14, wherein at least the disengaging the first actuator is performed while force equalization is applied to at least the test actuator.
